# EUROPEAN PATENT SPECIFICATION

(11) **EP 3 728 985 B1**
(45) Date of publication and mention of the grant of the patent: **10.07.2024**
(21) Application number: 18815242.5
(22) Date of filing: 14.12.2018
(51) Int. Cl.: F41H 1/08, F41H 5/04, A42B 3/06, A42C 2/00

(54) **A PROCESS FOR PRODUCING A BALLISTIC-RESISTANT CURVED MOLDED ARTICLE AND A BALLISTIC-RESISTANT CURVED MOLDED ARTICLE**
VERFAHREN ZUR HERSTELLUNG EINES SCHUSSBESTÄNDIGEN, GEBOGENEN FORMARTIKELS UND SCHUSSBESTÄNDIGER, GEBOGENER FORMARTIKEL
PROCÉDÉ DE PRODUCTION D'UN ARTICLE MOULÉ COURBE ANTI-PROJECTILES ET ARTICLE MOULÉ COURBE ANTI-PROJECTILES

(30) Priority: 22.12.2017 US 201762609676 P; 25.01.2018 EP 18153437
(43) Date of publication of application: 28.10.2020
(73) Proprietor: Avient Protective Materials B.V., 6167 RD Geleen (NL)
(72) Inventor: VAN ELBURG, Johann, 6100 AA ECHT (NL); VAN DER WERFF, Harm, 6100 AA ECHT (NL); MARISSEN, Roelof, 6100 AA ECHT (NL); HEISSERER, Ulrich, 6100 AA ECHT (NL); PEREZ GRATEROL, Raul Marcelino, 6100 AA ECHT (NL)
(74) Representative: Avient Protective Materials
(86) International application number: PCT/EP2018/084993
(87) International publication number: WO 2019/121404

(56) References cited:
- EP-A1- 2 134 531
- EP-B1- 2 134 531
- WO-A1-2015/018909
- WO-A1-2016/038182
- US-A1- 2016 076 854
- US-B2- 8 986 810

## Description

The present invention relates to a process for producing a ballistic-resistant curved molded article comprising a plurality of composite sheets comprising ultrahigh molecular weight polyethylene fibers and a matrix. The invention also relates to ballistic-resistant curved molded articles, and especially to a ballistic-resistant helmet shell with improved mechanical properties.

Processes for producing ballistic-resistant curved molded articles, i.e. a helmet shell, comprising a consolidated stack of composite sheets comprising unidirectionally aligned anti-ballistic fibers and a binder are known in the prior art. For example from WO2007/107359. EP2134531 provides an alternative process by winding matrix impregnated polyethylene filaments or tapes onto a mandrel to form a pre-shaped helmet shell. In recent years, the focus in helmet shell developments was put on a reduction of helmet weight while maintaining or even further improving ballistic-resistant properties of the helmets. This development is accounted to the increased wearing comfort and that modern uses of ballistic-resistant helmets involve the addition of equipment such as communications equipment, goggles and night vision glasses. Typically the weight reduction is achieved by opting for lower density high performance fiber system combined with a high stiffness of the shell. In recent years such improvements have often be reported to be achieved by composite sheets comprising the high strength but light weight ultrahigh molecular weight based polyethylene based fibers, also referred to as high modulus polyethylene (HMPE) fibers. Light weight helmets with maintained or even improved ballistic properties have been achieved.

Composite sheets comprising HMPE fibers are amongst other described in WO2015/018909 in the form of a three-layered ballistic resistant article comprising one core layer of fibers with an elastomeric matrix and two face layers of fibers in a non-elastomeric matrix material, but also in US8986810 describing ballistic resistant composite articles that are resistant to both backface deformation and ballistic penetration, whereby multiple fiber composites are attached to each other such that fibers in each adjacent composite are oriented at different angles. US 2016/0076854 describes composite article with a high-strain rate hardening explosion resistant component and ballistic-resistant component comprising continuous filament yarns or a non-filamentary oriented polyethylene layer. A problem that has been neglected so far is that the reduction of areal density of the helmets, especially by replacement of aramid or inorganic fiber systems by HMPE fiber composites, has resulted in helmet systems with a poor blunt impact performance. Furthermore, such light helmets with a substantially reduced areal density and thickness show low performance of the helmet shell in lateral compression testing, also known as ear to ear stiffness.

An object of the present invention is to provide a process for the manufacture of ballistic-resistant curved molded articles, especially helmet shells, which provides a high standard of ballistic protection and low weight combined with an improved blunt impact performance, especially an average blunt impact of an acceleration of below 110 G when measured according to DOT FMVSS 218. A further object is to provide a process to manufacture an anti-ballistic curved molded article, especially a helmet shell, having a higher level of ballistic resistance combined with an improved back face deformation when tested against a 9 mm FMJ RN Remmington thread according to NIJ010601. A further objective of the present invention is to provide a process to manufacture an anti-ballistic curved molded article, especially a helmet shells, which combine some of the mentioned advantages with a high ear to ear stiffness.

The present inventors have found that a curved molded article with the above described advantages can readily be produced by compression molding a stack of composite sheets comprising unidirectionally aligned ultra-high molecular weight polyethylene (UHMWPE) fibers and a matrix comprising a polyethylene resin. Accordingly, the present invention provides a process for producing a ballistic-resistant curved molded article according to claim 1, said process comprising pressing in a mold a stack comprising a plurality of composite sheets having unidirectionally aligned ultra-high molecular weight polyethylene (UHMWPE) fibers and a matrix comprising a polyethylene resin being a homopolymer or copolymer of ethylene having a density of between 870 to 980 kg/m³ when measured according to ISO1183 and a melt flow index of between 0.5 and 50 g/10min when measured according to ASTM 1238B-13 at a temperature of 190°C and a weight of 21.6 kg.

The present invention further provides a ballistic-resistant curved molded article according to claim 6, which article comprises a plurality of molded composite sheets comprising unidirectionally aligned ultra-high molecular weight polyethylene (UHMWPE) fibers and a matrix comprising a polyethylene resin being a homopolymer or copolymer of ethylene having a density of between 870 to 980 kg/m³ when measured according to ISO1183 and a melt flow index of between 0.5 and 50 g/10min when measured according to ASTM 1238B-13 at a temperature of 190°C and a weight of 21.6 kg, which ballistic-resistant curved molded article has an areal density of less than 8.0 kg/m² and a V₅₀ 17 grain FSP of at least 770 m/s.

The present invention also provides a ballistic-resistant molded article being a helmet shell or a radome.

A helmet shell is the basic structure of a helmet, and provides the ballistic resistance. The shell excludes linings, straps, fittings, decoration and accessories.

As used herein, a compacted, or consolidated, stack refers to multiple composite sheets which are pressed together at elevated temperature to produce a single article.

As used herein a "curved" molded article is a non-planar molded article. It has a three-dimensional, rather than two-dimensional form. The article may have single or multiple curves.

As used herein the term "a plurality" means an integer greater than 1.

As used herein the term "unidirectionally aligned" means fibers in a layer are orientated substantially parallel to one another, in the plane defined by the layer.

As used herein, average thickness is measured by taking at least 5 measurements distributed over the curved article, each measurement spaced apart from the other measurements by at least 5 cm, and calculating the mean value.

As used herein, average areal density is calculated by multiplying the average thickness by the density of the compression molded curved article.

As used herein, density of the compression molded article is measured by weighing a sample of the compression molded article and dividing it by the volume of said sample.

The process of the present invention comprising the steps of forming a stack of a plurality of composite sheets, pressing the stack comprising the composite sheets at a temperature of between 80°C to 145°C and a pressure of between 10 and 400 bar for at least 5 minutes to obtain a curved molded article, cooling the compacted stack to a temperature below 80°C while maintaining the pressure above 10 bar and releasing the pressure from the cooled curved molded article. Preferably such process takes place in an adequate mold, well known to the person skilled in the art, whereby the stack is placed in an open mould, consisting of a female and a male part. Optionally the stack is clamped to one part of the mould, generally the female part. This clamping may be done through a so-called control member and is done in such a way that the stack is fixed in its position towards the said mould part, but that the stack can still slip and move during the closing of the mould, i.e. when moving of the male part into the female mould part. The clamping may be advantageously used when the curved shaped part has a substantial curvature, such as a helmet shell.

Once the mould is closed e.g. by moving the male part into the female mould part and the stack is consolidated under temperature and pressure into a curved molded article, such as a helmet shell. The process comprises the step wherein the stack of composite sheets is heated to a temperature in the range of between 80°C to 150°C, preferably between 90°C to 145°C and more preferably between 100°C to 140°C. The lower temperature is preferably higher than the melting temperature of the polyethylene resin whereby the upper temperature should be below the melting temperature of the UHMWPE fibers, typically 153°C. The pressure that is applied during the consolidation step is between 10 and 400 bar, preferably the pressure is between 50 and 350 bar, more preferably between 100 and 300 bar. In a preferred embodiment, the heating of the stack overlaps with the compression. In a further preferred embodiment, the compression of the stack is performed in more than one compression phases, whereby pressure is applied and released during the heating up phase of the stack. The maximum pressure applied to the stack during consolidation is also called the peak pressure. The consolidation time may be 5 minutes at the consolidation temperature and peak pressure provided here above, preferably consolidation time is at least 10 minutes, more preferably at least 15. The consolidated stack is preferably cooled in the mold, still under pressure. As soon as the consolidated stack has cooled to a temperature, typically of 80°C, preferably 50°C, the mold can be opened and the consolidated stack is released from the mold. Moreover, the consolidated stack may further be processed through known mechanical techniques as sawing, grinding, drilling to the desired final dimensions.

By fiber is herein understood an elongated body, the length dimension of which is much greater than the transverse dimensions of width and thickness. Accordingly, the term fiber includes filament, ribbon, strip, band, tape, and the like having regular or irregular cross-sections. The fiber may have continuous lengths, known in the art for example as filament or as continuous filament, or discontinuous lengths, known in the art as staple fibers. A yarn for the purpose of the invention is an elongated body containing many individual fibers. By individual fiber is herein understood the fiber as such. Preferably the high tenacity polyethylene fibers of the present invention are tapes, filaments or staple fibers.

In the context of the present invention high tenacity polyethylene fibers are understood to be polyethylene fibers with a tenacity of at least 1.5 N/tex, more preferably at least 1.8 N/tex, more preferably at least 2.0 N/tex, even more preferably at least 2.5 N/tex and most preferably at least 3.5 N/tex. Preferred polyethylene is high molecular weight (HMWPE) or ultrahigh molecular weight polyethylene (UHMWPE). Best results were obtained when the high tenacity polyethylene fibers comprise ultra-high molecular weight polyethylene (UHMWPE) and have a tenacity of at least 2.0 N/tex, more preferably at least 3.5 N/tex. The inventors observed that for HMWPE and UHMWPE the best ballistic performances could be achieved.

The polyethylene (PE) present in the fibers may be linear or branched, whereby linear polyethylene is preferred. Linear polyethylene is herein understood to mean polyethylene with less than 1 side chain per 100 carbon atoms, and preferably with less than 1 side chain per 300 carbon atoms; a side chain or branch generally containing at least 10 carbon atoms. Side chains may suitably be measured by FTIR. The linear polyethylene may further contain up to 5 mol% of one or more other alkenes that are copolymerisable therewith, such as propene, 1-butene, 1-pentene, 4-methylpentene, 1-hexene and/or 1-octene.

The PE is preferably of high molecular weight with an intrinsic viscosity (IV) of at least 2 dl/g; more preferably of at least 4 dl/g, most preferably of at least 8 dl/g. Such polyethylene with IV exceeding 4 dl/g are also referred to as ultra-high molecular weight polyethylene (UHMWPE). Intrinsic viscosity is a measure for molecular weight that can more easily be determined than actual molar mass parameters like number and weigh average molecular weights (Mn and Mw).

The high tenacity fibers present in the composite sheets according to the invention may be obtained by various processes, for example by a melt spinning process, a gel spinning process or a solid-state powder compaction process. Such processes are well known to the person skilled in the art.

The composite sheet used in the process of the present invention comprises a matrix comprising a polyethylene resin being homopolymer or copolymer of ethylene. The matrix may comprise further polymeric components as well as customary additives such as plasticizers, surfactants, fillers, stabilizer, colorant, etc.

The amount of homopolymer or polyethylene resin present in the composite sheet according to the invention may vary within wide ranges and will especially depend upon the required final properties of the ballistic-resistant curved molded article as well as the nature of the polyethylene fibers present in the monolayers. Typically the amount of polyethylene resin present in the composite sheet is at least 2 wt%, preferably at least 5 wt%. In a preferred embodiment said concentration of polyethylene resin is at most 25 wt%, preferably at most 20 wt%, even more preferably at most 18 wt% and most preferably at most 16 wt%. In another preferred embodiment the amount of the polyethylene resin is between 2 and 25 wt%, preferably between 5 and 20 wt%, most preferably between 8 and 18 wt%, whereby the weight percentage are the weight of polyethylene resin in the total weight of the composite sheet. In a further preferred embodiment the amount of polyethylene resin is at least 15 wt%, preferably at least 18 wt% and even more preferably at least 20 wt%. In another preferred embodiment the amount of the polyethylene resin is between 10 and 50 wt%, preferably between 15 and 40 wt%, most preferably between 18 wt% and 30 wt%.

The polyethylene resin present in the matrix has a density as measured according to ISO1183 in the range from 870 to 980 kg/m³, preferably from 890 to 970 kg/m³, more preferably from 910 to 960 kg/m³. The inventors identified that polyethylene resins with densities within said preferred ranges provide an improved compatibility with the other components of the composite sheet.

The polyethylene resin has a melt flow index of between 0.5 and 50 g/10min when measured according to ASTM 1238B-13 at a temperature of 190°C and a weight of 21.6 kg. In a preferred embodiment, the melt flow index is between 1.0 and 30 and more preferably between 2.0 and 20 g/10min. The inventors observed that such viscosity range of the polyethylene resin provide the advantage of an optimized processing windows of the process of the invention, allowing manufacturing of the molded articles from said inventive process in an industrial applicable processing window. Too high melt flow index may cause problems with shifting of fibers and/or sheets during processing, due to too high lubricity of the polyethylene resin. In contrast, a polyethylene resin with a too low melt flow index, i.e. a melt flow index close to zero, is not melt processable and may hamper the mobility and fusing character of the matrix and/or polyethylene resin during the manufacturing process of the composite sheets or compression molded articles made thereof, resulting in an inhomogeneous and/or discontinuous distribution of the polyethylene resin throughout the sheet or article. Hence in a preferred embodiment of the invention, the polyethylene resin is a melt-processable resin. The melt flow index of the polyethylene resins, and especially the further below described at least partially neutralized polymers, may be affected by the moisture content of the measured sample. Therefore, in addition to the above mentioned ASTM method, the polyethylene resins needs to be measured in a dried state, which can be achieved by drying the samples in vacuum at 120°C for at least 12 hours before testing.

A further aspect of the invention concerns the modulus of the polyethylene resin present in the matrix of the composite sheets, which may vary in wide ranges. Nevertheless as yet described, preparation and further processing of the sheets are affected by the properties of the polyethylene resin at room temperature but also in vicinity of the processing temperature, therefor a preferred embodiment of the invention is that the polyethylene resin has a modulus at 25°C of between 50 MPa and 500 MPa, preferably between 80 and 400 MPa, and more preferably between 100 and 300 MPa and a modulus at 110°C of between 0.1 and 10 MPa, preferably between 0.2 and 8 MPa and most preferably between 0.4 and 5 MPa, whereby the modulus is determined by DMTA on 2 mm thick samples in accordance with ASTM D5026 at a frequency of 1 Hz at a heating rate of 5°C.

In the context of the present invention, polyethylene resin refers to polyethylene and ethylene copolymers, jointly or individually. It may comprise the various forms of polyethylene, ethylene-propylene copolymers, other ethylene copolymers with co-monomers such as 1-butene, isobutylene, as well as copolymers of ethylene with hetero atom containing monomers such unsaturated carboxylic acids or derivatives thereof like acrylic acid, methacrylic acid, vinyl acetate, maleic anhydride, ethyl acrylate, methyl acrylate. In the absence of co-monomer in the polyethylene resin, a wide variety of polyethylene or polypropylene may be used amongst which linear low density polyethylene (LLDPE), very low density polyethylene (VLDPE), low density polyethylene (LDPE), or high density polyethylene (HDPE).

Therefor a preferred embodiment of the invention comprises a composite sheet wherein the polyethylene resin comprises at least 90 mol% of monomeric units derived from ethylene, preferably at least 92 mol%, more preferably at least 93 mol%, even more preferably at least 94 mol% and most preferably at least 95 mol% of ethylene derived monomeric units. Preferably the amount of monomeric units derived from ethylene is at most 99 mol%, more preferably at most 98 mol%.

Preferably the polyethylene resin may be a functionalized polyethylene or ethylene copolymer. Such functionalized polymers are often referred to as functional copolymers or grafted polymers, whereby the grafting refers to the chemical modification of the polymer backbone mainly with ethylenically unsaturated monomers comprising heteroatoms and whereas functional copolymers refer to the copolymerization of ethylene with ethylenically unsaturated monomers comprising heteroatoms. Preferably the ethylenically unsaturated monomer comprises oxygen and/or nitrogen atoms. Most preferably the ethylenically unsaturated monomer comprises a carboxylic acid group or derivatives thereof resulting in an acylated polymer, specifically an acetylated polyethylene. Preferably, the carboxylic reactants are selected from the group consisting of acrylic, methacrylic, cinnamic, crotonic, and maleic, fumaric, and itaconic reactants. Said functionalized polymers typically comprise between 1 and 8 mol% of carboxylic reactant. The presence of such functionalization in the resin may substantially enhance the dispersability of the resin and/or allow a reduction of further additives present for that purpose such as surfactants.

In the case the polyethylene resin is a polyethylene functionalized with carboxylic acid groups or derivatives thereof, it is a preferred embodiment of the invention that the carboxylic acid groups are at least partially neutralized. Herein neutralized or neutralization refers to the fact that the carboxylic acid group is present as a carboxylate salt, with a corresponding cationic counterion. Such at least partially neutralized acidic polymers are also referred to as ionomers. The inventors identified that the presence of an at least partially neutralized carboxylic acid functionality in the polyethylene resin further improved the robustness of the manufacturing process of compression molded articles from the inventive sheets. It is yet unclear to the inventors whether such improvement can be accounted to the more complex polymer rheology, the increase of polarity and/or any other change of physical property of the polyethylene resin.

In a further preferred embodiment of the invention, the polyethylene resin is an at least partially neutralized copolymer of ethylene further comprising monomeric units derived from at least one unsaturated carboxylic acid. Such polyethylene resins show further increased in-plane shear chord modulus of the inventive sheets. Whereas the molar ratio of monomeric units derived from ethylene and the unsaturated carboxylic acid monomer may vary widely, the inventors identified that polyethylene resins with increased levels of ethylene monomeric units are favored since they further improve the performance of the sheets and compression molded articles of the invention at elevated temperatures, while still providing easily processable polyethylene resins during manufacturing.

In case of an at least partially neutralized copolymer of ethylene with carboxylic acid monomeric units, the density of the polyethylene resin is preferably in the range of from 910 to 970 kg/m³, preferably from 920 to 970 kg/m³, more preferably from 930 to 960 kg/m³, whereby the density may depend both on polymer composition and degree of neutralization.

In a further preferred embodiment of the present invention the at least one unsaturated carboxylic acid comonomer present in the at least partially neutralized copolymer of ethylene is acrylic acid or methacrylic acid or a combination thereof. In a yet preferred embodiment the copolymer of ethylene is ethylene acrylic acid copolymer (EAA) or ethylene methacrylic acid copolymer (EMA) or mixtures thereof. The inventors identified that the ionomeric derivatives of these polymers provide a set of processing conditions suitable for the processing of the composite sheets comprising high tenacity polyethylene fibers. During said processing conditions, the concerned polyethylene resins become melt processible without a substantial loos of viscosity or increased stickiness to parts of the equipment used.

The polyethylene resin may be neutralized by a large variety of cationic species, such as atoms bearing at least one positive charge but also molecular structures, such as polymers, bearing 2 or more positive charges. Preferably the carboxylic acid comprises as neutralizing ion a cation selected from the group consisting of Na⁺, K⁺, Li+, Ag⁺, Cu⁺, Cu²⁺, Be⁺, Mg²⁺, Ca²⁺, Sn²⁺, Sn⁴⁺, Fe²⁺, Fe³⁺, Zn²⁺, Al³⁺, NH₄⁺ and combinations thereof. It was observed that with these preferred cations, the viscosity and other physical properties of the polyethylene resin can be controled to the processing conditions to prepare and/or use the composite sheet of the invention. Especially preferred cations are Na⁺, K⁺, Li⁺, Mg²⁺, Ca²⁺, Sn²⁺, Zn²⁺, Al³⁺ and mixtures thereof. These cations provide polyethylene resins with optimized processibility at temperatures in the range of 80 to 140°C.

In a preferred embodiment of the invention, the polyethylene resin, especially the at least partially neutralized copolymer of ethylene with at least one unsaturated carboxylic acid comonomer, comprises at least two distinct neutralizing ions.

In a yet preferred embodiment of the invention the polyethylene resin, especially the at least partially neutralized copolymer of ethylene further comprising monomeric units derived from at least one unsaturated carboxylic acid, comprises between 1.0 and 30 mol% of ion NH₄⁺ as the neutralizing ion. The remainder of the neutralizing ions may be any one or combinations of the preferred cations described above. Preferably the amount of ammonia cation (NH₄⁺) is between 2.0 and 25 mol%, and more preferably between 5.0 and 20 mol%. By mol% is herein understood the molar ratio of the concerned cation to the total of cations present as neutralizing ion in the polyethylene resin. The inventors observed that the presence of ammonia cations in the above preferred ranges provide polyethylene resins which are easily melt processable under commercial processing conditions of the inventive sheets and compression molded articles made thereof. More preferably, the polyethylene resin especially the at least partially neutralized copolymer of ethylene further comprising monomeric units derived from at least one unsaturated carboxylic acid, comprises between 70 and 99 mol%, more preferably 75 and 98 mol%, and even more preferably 80 and 95 mol% of neutralizing ions selected from the group consisting of Na⁺, K⁺, Li⁺, Mg²⁺, Ca²⁺, Sn²⁺, Zn²⁺, Al³⁺ and mixtures thereof. The inventors observed that above preferred mixtures and ratios provide composite sheets with unmet processing robustness, especially with regards to the formation of internal defects by bubbling.

By at least partly neutralize is herein understood that at least some of the carboxyl groups are present as carboxylate salts. Preferably the overall level of neutralization is at least 10 mol%, preferably at least 20 mol% and more preferably at least 30 mol%, whereby the level of neutralization in mol% is expressing the moles of carboxylate salts divided by the moles of carboxylic acid and carboxylate salt present in the polyethylene resin, especially the at least partially neutralized copolymer of ethylene further comprising monomeric units derived from at least one unsaturated carboxylic acid. The maximum level of neutralization is 100 mol%, referring to a polyethylene resin wherein no measurable amount of carboxylic acid groups is present in a protonated form. In a preferred embodiment, the degree of neutralization of the carboxylic acid groups of the polyethylene resin, especially the copolymer, is between 50 and 100 mol%, more preferably between 60 and 99 mol%.

Curved molded article like the ones produced by the process of the present invention provide a combination of properties hitherto not achieved by anti-ballistic curved molded articles comprising high tenacity polyethylene fibers. Therefor the present invention also concerns a ballistic-resistant curved molded article, especially a helmet shell, which article comprises a plurality of molded composite sheets comprising unidirectionally aligned high tenacity polyethylene fibers and a matrix comprising a polyethylene resin being a homopolymer or copolymer of ethylene having a density of between 870 to 980 kg/m³ when measured according to ISO 1183 and a melt flow index of between 0.5 and 50 g/10min when measured according to ASTM 1238B-13 at a temperature of 190°C and a weight of 21.6 kg, which ballistic-resistant curved molded article has an areal density of less than 8.0 kg/m² and a V₅₀ 17 grain FSP of greater than 750 m/s. Further, the curved molded article, especially the helmet shell, of the present invention may have a V₅₀ 17 grain FSP of at least 770 m/s, more preferably at least 790 m/s. Preferably the areal density of the curved molded article is less than 7.5 kg/m², more preferably less than 7.0 kg/m², even more preferably less than 6.5 kg/m² and most preferably less than 6.0 kg/m². Preferably the areal density of the curved molded article is between 4.0 and 7.0 kg/m², more preferably between 4.5 and 6.5 kg/m² and most preferably between 5.0 and 6.0 kg/m². The inventors identified that even at such low areal densities, helmets shells according to the invention are obtained showing good ear to ear stiffness and ballistic resistant properties.

A preferred embodiment of the present invention concerns a ballistic-resistant curved molded article containing more than 70 wt% of high tenacity polyethylene fibers, preferably more than 75 wt% and most preferably more than 80 wt% high tenacity polyethylene fibers, whereby the wt% are expressed as mass of fibers to the total mass of the molded article.

The inventors identified that the curved molded articles according to the invention provide superior mechanical and anti-ballistic properties at reduced average thickness of the curved molded article. Therefor a preferred embodiment of the present invention concerns a ballistic-resistant curved molded article having an average thickness of at most 8.0 mm, preferably of at most 7.5 mm, more preferably of at most 7.0 mm and most preferably of at most 6.5 mm. Preferably the average thickness of the curved molded articles of the invention is between 4.0 and 8.0 mm, more preferably between 5.0 and 7.5 mm and most preferably between 5.5 and 7.0 mm. Curved molded articles and especially helmet shells in these preferred ranges show a compromise between anti-ballistic performance and light weight of the molded article.

The present inventors have found that in addition, other ballistic resistant properties may be improved, for example back face deformation. Back face signature is effectively the size of the impact dent measurable on the non-impact side of the article. Typically it is measured in mm of greatest deformation perpendicular to the plane of the impacted surface of the ballistic resistant article. It was surprisingly observed that the size of the impact dent is small, if curved molded articles according to the present invention are used in armor. In other words, the back face signature is small. Such armor is especially suitable for combat helmet shells, because they show reduced back face signature on stopping projectiles, thus reducing trauma on the human skull and brain after being hit by a stopped projectile. Therefor an embodiment of the present invention concerns a ballistic-resistant curved molded article having a back face signature (BFS) of less than 20 mm when measured according to NIJ010601 / 9mm FMJ. Preferably the BFS is less than 18 mm, more preferably less than 16 mm.

In an further embodiment, the ballistic-resistant curved molded article may also comprise a second anti-ballistic fiber, other than the above high tenacity polyethylene fibers. Herewith are understood high tenacity fibers other than manufactured from polyethylene, such as inorganic fibers like carbon fiber, mineral fibers and glass fibers or organic fibers manufactured from a polymer chosen from the group consisting of polyamides and polyaramides, e.g. poly(p-phenylene terephthalamide) (known as Kevlar^{®}); poly(tetrafluoroethylene) (PTFE); poly{2,6-diimidazo-[4,5b-4',5'e]pyridinylene-1,4(2,5-dihydroxy)phenylene} (known as M5); poly(p-phenylene-2, 6-benzobisoxazole) (PBO) (known as Zylon^{®}); liquid crystal polymers (LCP); poly(hexamethyleneadipamide) (known as nylon 6,6), poly(4-aminobutyric acid) (known as nylon 6); polyesters, e.g. polyethylene terephthalate), poly(butyleneterephthalate), and poly(1,4 cyclohexylidene dimethylene terephthalate); polyvinyl alcohols; and also polyolefins e.g. homopolymers and copolymers propylene. Preferably such further fibers are present in an at least one further composite sheet comprising said second anti-ballistic fiber and a matrix. This layer may be placed on the inner or outer surface of the stack of layers, or between two layers of the stack or a combination of the two, for example alternating with the layers of unidirectionally aligned anti-ballistic fiber and a binder. The second anti-ballistic fiber may be chosen from the listed range of anti-ballistic fibers. Preferably the second anti-ballistic fiber is an inorganic fiber. Most preferably, the second anti-ballistic fiber is carbon fiber.

Preferably, the layer comprising a second anti-ballistic fiber is close to or at the outer surface (or strike face) of the anti-ballistic curved molded article of the present invention. The strike face of the shaped part is the side of the product facing the ballistic impact. The layer comprising a second anti-ballistic fiber may be smaller than the surface area of the anti-ballistic curved molded article. For example it may only be present through a cross section of part of the article. In case the anti-ballistic curved molded article is a helmet shell, it may take the form of a small disk, located close to the crown. Alternatively, it may be an open circle or annular ring present at the front, back and sides of the helmet shell but not at the crown. An advantage hereof is that a shaped part, e.g. in the form of a helmet, as obtained with the process according to the invention gives a higher stiffness in the sideways direction. This means that a person wearing such helmet has a further improved side protection of e.g. his ears upon impact. Typically, the anti-ballistic curved molded article of the present invention further comprises at least one layer of carbon fiber. Preferably, the at least one layer of carbon fiber is located close to or at the outer surface of the anti-ballistic curved molded article, especially the helmet shell. A layer of carbon fiber comprises woven or non-woven, including unidirectional oriented, carbon fibers and a binder.

The ballistic-resistant curved molded article, preferably the helmet shell, may further comprise a coating. For example a coating imparting impact resistance ease of decoration or ease of release from the mould. The coating could be polyamide or polyethylene. Preferably the ballistic-resistant curved molded article of the present invention further comprises on the outside surface a coating comprising polyurea, for example, Paxcon^{®} available from Line-X^{®}, Huntsville, Alabama, USA.

The inventors identified that helmet shells produced according to the process of the present invention provide advantageous anti-ballistic and non-ballsitic properties. It was surprisingly discovered that the shells comprising high tenacity polyethylene fibers showed an unpredicted high stiffness when subjected to single or cyclic compression. Especially the resistance of the helmet shell to a transversal, ear-to-ear, compression is substantially improved compared to known high tenacity polyethylene comprising helmets of the prior art. Therefor a preferred embodiment of the present invention is a ballistic-resistant helmet shell having an ear-to-ear stiffness of at most 5 mm measured 24h after 25 compression cycles at 200 lbs. Preferably the helmet shell has an ear-to-ear stiffness of at most 4 mm, more preferably of at most 3 mm and most preferably of at most 2 mm. The helmet shells according to the invention further showed to equally fulfill ear to ear stiffness requirements when measured at a cycled load of 300lbs. Therefor a further preferred embodiment of the invention is a ballistic-resistant helmet shell having an ear-to-ear stiffness of at most 5 mm measured 24h after 25 compression cycles at 300 lbs. Preferably the helmet shell has an ear-to-ear stiffness of at most 4 mm, more preferably of at most 3 mm and most preferably of at most 2 mm

Furthermore, despite the high stiffness of the helmets according to the invention, the helmet shells show an improved resistance against blunt impact, whereby the helmet shell shows a maximum acceleration remarkably lower than the maximum acceleration observed for state of the art helmet shells. Therefor a further embodiment of the invention concerns ballistic-resistant helmet shells having an average blunt impact performance of less than 110 G when measured according to DOT FMVSS 218. Preferably the average blunt impact performance is at most 100 G, more preferably at most 95 G. Not only are such helmet shells lighter and provide improved robustness against deformation, do these helmet shells provide additional protection against head injuries when hit by heavy objects.

Helmet shells as described herein enable the manufacture of ballistic resistant helmets which are lighter and safer than helmets known hitherto. Therefore an embodiment of the invention concerns ballistic-resistant helmets comprising the ballistic-resistant helmet shell as described here above.

Test methods as referred to in the present application, are as follows:
- IV: the Intrinsic Viscosity is determined according to method ASTM D1601 (2004) at 135°C in decalin, the dissolution time being 16 hours, with BHT (Butylated Hydroxy Toluene) as anti-oxidant in an amount of 2 g/l solution, by extrapolating the viscosity as measured at different concentrations to zero concentration.
- Tensile properties: tenacity and elongation at break (or eab) are defined and determined on monofilament fiber with a procedure in accordance with ISO 5079:1995, using a Textechno's Favimat (tester no. 37074, from Textechno Herbert Stein GmbH & Co. KG, Monchengladbach, Germany) with a nominal gauge length of the fibre of 50 mm, a crosshead speed of 25 mm/min and clamps with standard jaw faces (4*4 mm) manufactured from Plexiglas^{®} of type pneumatic grip. The filament was preloaded with 0.004 N/tex at the speed of 25 mm/min. For calculation of the tenacity the tensile forces measured are divided by the filament linear density (titer); values in GPa are calculated assuming a density of 0.97 g/cm³
   - DMTA measurements of the polyethylene resin are performed on samples with a width of approximately 2 mm, punched out of compressed films of the polyethylene resin. The thickness is measured with a calibrated Heidenhain thickness meter. The dynamic mechanical analyses are carried out in accordance with ASTM D5026 using a RSA-G2 test system from TA Instruments at a frequency of 1 Hz and over a temperature ranging from -130°C to 250°C with a heating rate of 5°C/min. During the measurements, the storage modulus (E'), loss modulus (E") and tangent delta (tan δ) are determined as a function of temperature.
- Melt flow index was determined by drying the sample in vacuum at 120°C for at least 12 hours before testing. The sample was then measured according to ASTM 1238B-13 at a temperature of 190°C and a weight of 21.6 kg.
- V₅₀ 17 g FSP was determined in accordance with MIL-STD-662f (1997): Shooting was performed using 17 gram Fragment Simulating Projectiles (FSP). Shooting was performed with an intended FSP speed being about equal to the expected V₅₀ (800 m/s). The actual FSP speed was measured before impact. In case a perforation occurred, the speed of the next shot was reduced with an anticipated amount of 15 m/s. In case the projectile was stopped, the next intended FSP speed was increased with 15 m/s. Each helmet was subjected to eight shots around the rim of the helmet at about equal distance of each other and at a distance of about 6 cm of the edge of the helmet. The final V₅₀ was determined as the average of the three highest speeds with a stop, and the three lowest speeds yielding a perforation.
   - Blunt impact tests of the PASGT_L helmet shells have been performed at room temperature according to DOT FMVSS 218. Whereby the reported accelerations are averaged over the performed tests. The helmets have been equipped with % inch team wendy zorbium pads and ACH-5 strap system with 5 point retention. The drop weight was an 11lbs test head at a drop height of 50 cm and an impact speed of 10 ft/second.
   - Back Face Signature was measured according to NIJ010601 with a 9 mm FMJ RN Remmington threat shot at 1400-1450 ft/s. The shell, pads and retention system was identical to the ones used for the blunt impact testing.
   - Ear to ear stiffness, also referred to as compression resistance (side to side), was performed on the helmet shell on a constant rate of extension (CRE) machine in accordance with ASTM Test Method D-76, except that the machine is used in the compression mode. The maximum shell width dimension of the helmet shell is measured using a top flat anvil to position the test specimen so that the highest width dimension is aligned with the center of the top anvil. The test specimen is compressed at the rate of 300 mm/minute until a force of 200 or respectively 300 lbs is reached. The applied force is released to 5 lbs and testing is repeated for a total of 25 cycles. After a period of 24 hours the height dimension is measured again. The deviation in height is reported in mm.

### Comparative Experiment

A helmet shell (PASGT_L) is made by stacking sheets of cross-plied mono-layers of unidirectionally aligned ultra-high molecular weight polyethylene fiber with a yarn tenacity of about 40.5 cN/dtex in a 17 wt% polyurethane matrix. In each cross-ply and between all cross-plies the fiber direction of the mono-layers is at an angle of 90° with respect to the adjacent mono-layers. The cross-plies have a thickness of about 140 micrometers and an areal density of about 136 g/m². To get equal thickness in the helmet shell, 32 plies with dimensions of 53 cm x 53 cm, 5 circular filler plies with a diameter of 260 mm, 2 filler plies with a diameter of 200 mm and one filler plie with a diameter of 160mm were stacked to a total areal density of the stack of about 5.4 kg/m². The stack was clamped in position over the female part of a helmet mold. Areal density is measured with respect to the outside surface of the helmet shell.

The stack was fixed in its position towards the said female mold part. The mold was closed by inserting the male part into the female part of the mold whereby the flat stack slowly was positioned against the female mold surface. This closing was done in a time span of 5 minutes in order to have a temperature transfer from the male and female mold part to the stack. The temperature of the mold was about 130 °C. The applied pressure was 2 MPa and the stack was retained in the mold until the temperature at the center of the stack was 130 °C. The system was degassed 3 times while at 2 MPa and left for 5 minutes. Subsequently, the pressure was increased to a compressive pressure of about 25 MPa, and the stack was kept under this pressure for 15 minutes at 130 °C. Next, the stack was cooled to a temperature of 50°C over a period of 30 minutes at the same compressive pressure. Subsequently the mold was opened and debris was cut from the helmet to obtain a smooth helmet edge.

### Example

The above comparative experiment is repeated with the difference that 42 composite sheets of cross-plied mono-layers of unidirectionally aligned ultra-high molecular weight polyethylene fiber with a yarn tenacity of about 40.5 cN/dtex embedded in a polyethylene resin being a neutralized ethylene acrylic acid copolymer. The acrylic acid level of the copolymer was about 10 wt% whereby the neutralization of the carboxylic acid exceeded 98% and consisted of about 17 mol% ammonia and 83 mol% potassium counter ions. The melt flow index of the dried neutralized copolymer was 4.5 g/10min (21.6kg, 190°C). The neutralized copolymer had a peak melting temperature at 85°C a modulus by DMTA of 150 MPa and 0.7 MPA at 25°C and 110°C respectively. The composite sheet had a matrix content of about 13 wt% and an areal density of about 126 g/m² and a thickness of about 130 micrometer. A stacking pattern as for the Comparative Experiment was used with the difference that 34 plies with a dimensions of 53 cm x 53 cm have been used. The areal density of the stack was about 5.4 kg/m². The stack was subjected to a compression molding step identical to the Comparative Experiment.
The results are shown in Table 1.

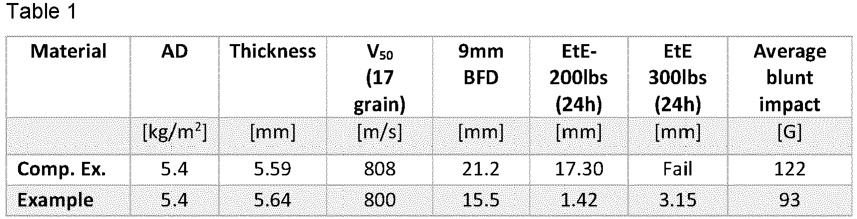

The results indicate that a helmet shell of the present invention with a considerable ballistic properties and an ear-to-ear stiffness of less than 5 mm has an average blunt impact deceleration of about 93 G. Further, surprisingly, the helmet shell of the present invention has an improved back face signature.

## Claims

1. A process for producing a ballistic-resistant curved molded article said process comprising
- forming a stack of a plurality of composite sheets
- pressing the stack comprising the composite sheets at a temperature of between 80°C to 150°C and a pressure of between 10 and 400 bar for at least 5 minutes to obtain a curved molded article,
- cooling the compacted stack to a temperature below 80°C while maintaining the pressure above 10 bar,
- releasing the pressure from the cooled curved molded article;
wherein the composite sheets comprise unidirectionally aligned high tenacity polyethylene fibers and a matrix comprising a polyethylene resin being a homopolymer or copolymer of ethylene, **characterised in that** said ethylene has a density of between 870 to 980 kg/m³ when measured according to ISO 1183 and a melt flow index of between 0.5 and 50 g/10min when measured in a dried state and according to ASTM 1238B-13 at a temperature of 190°C and a weight of 21.6 kg.

2. The process according to claim 1 wherein the composite sheet comprises from 2 to 25 wt% of the polyethylene resin based on the total weight of the composite sheet.

3. The process according to any one of claims 1 and 2, wherein the polyethylene resin has a tensile modulus at 25°C of between 50 MPa and 500 MPa and a tensile modulus at 110°C of between 0.1 and 10 MPa, determined in accordance with ASTM D5026 at a frequency of 1 Hz at a heating rate of 5°C.

4. The process according to any one of claims 1 to 3, wherein the polyethylene resin comprises at least 90 mol% of monomeric units derived from ethylene.

5. The process according to any one of the claims 1 to 4, wherein the polyethylene resin is an at least partially neutralized copolymer of ethylene further comprising monomeric units derived from at least one unsaturated carboxylic acid.

6. A ballistic-resistant curved molded article, which article comprises a plurality of molded composite sheets comprising unidirectionally aligned ultra-high molecular weight polyethylene (UHMWPE) fibers and a matrix comprising a polyethylene resin being a homopolymer or copolymer of ethylene having a density of between 870 to 980 kg/m³ when measured according to ISO 1183 and a melt flow index of between 0.5 and 50 g/10min when measured in a dried state and according to ASTM 1238B-13 at a temperature of 190°C and a weight of 21.6 kg, which ballistic-resistant curved molded article has an areal density of less than 8.0 kg/m² and a V₅₀ 17 grain FSP of greater than 750 m/s according to MIL-STD-662f (1997).

7. The ballistic-resistant curved molded article according to claim 6, wherein the ballistic-resistant curved molded article has an average thickness of less than 8 mm.

8. The ballistic-resistant curved molded article according to any one of the claims 6 or 7, wherein the ballistic-resistant curved molded article has a back face signature of less than 20 mm when measured according to NIJ010601 9 mm FMJ RN Remmington threat.

9. The ballistic-resistant curved molded article according to any one of claims 6 to 8, which further comprises at least one layer comprising carbon fiber.

10. A ballistic-resistant curved molded article according to any one of claims 6 to 9, which further comprises on the outside surface a coating comprising polyurea.

11. The ballistic-resistant curved molded article according to any one of the claims 6 to 10 wherein the ballistic-resistant curved molded article is a ballistic-resistant helmet shell or a radome.

12. The ballistic-resistant curved molded article of claim 11 being a ballistic-resistant helmet shell and having an ear-to-ear stiffness of at most 5 mm measured 24h after 25 compression cycles at 200 lbs.

13. The ballistic-resistant curved molded article of claim 11 being a ballistic-resistant helmet shell or the ballistic-resistant curved molded article of claim 12 having a blunt impact performance of less than 110 G when measured according to DOT FMVSS 218.

14. A ballistic-resistant helmet comprising the ballistic-resistant curved molded article being a ballistic-resistant helmet shell as defined in anyone of the claims 11 to 13.

## Patentansprüche

1. Verfahren zur Herstellung eines durchschusshemmenden gekrümmten Formkörpers, wobei das Verfahren umfasst:
- Bilden eines Stapels aus einer Vielzahl von Verbundstoffbahnen,
- Pressen des Stapels, der die Verbundstoffbahnen umfasst, bei einer Temperatur von zwischen 80 °C und 150 °C und einem Druck von zwischen 10 und 400 bar für wenigstens 5 Minuten, um einen gekrümmten Formkörper zu erhalten,
- Kühlen des komprimierten Stapels auf eine Temperatur unter 80 °C unter Halten des Drucks bei über 10 bar,
- Lösen des Drucks von dem abgekühlten gekrümmten Formkörper;
wobei die Verbundstoffbahnen unidirektional ausgerichtete Polyethylenfasern mit hoher Zugfestigkeit und eine Matrix umfassend ein Polyethylenharz, das ein Homopolymer oder Copolymer von Ethylen ist, umfassen, **dadurch gekennzeichnet, dass** das Ethylen eine Dichte von zwischen 870 und 980 kg/m³, wenn gemessen gemäß ISO 1183, und einen Schmelzflussindex von zwischen 0,5 und 50 g/10 min, wenn gemessen in einem trockenen Zustand und gemäß ASTM 1238B-13 bei einer Temperatur von 190 °C und einem Gewicht von 21,6 kg, aufweist.

2. Verfahren gemäß Anspruch 1, wobei die Verbundstoffbahn von 2 bis 25 Gew.-% an dem Polyethylenharz, bezogen auf das Gesamtgewicht der Verbundstoffbahn, umfasst.

3. Verfahren gemäß einem der Ansprüche 1 und 2, wobei das Polyethylenharz einen Zugmodul bei 25 °C von zwischen 50 MPa und 500 MPa und einen Zugmodul bei 110 °C von zwischen 0,1 MPa und 10 MPa, bestimmt gemäß ASTM D5026 bei einer Frequenz von 1 Hz bei einer Heizrate von 5 °C, aufweist.

4. Verfahren gemäß einem der Ansprüche 1 bis 3, wobei das Polyethylenharz wenigstens 90 mol-% an Monomereinheiten abgeleitet von Ethylen umfasst.

5. Verfahren gemäß einem der Ansprüche 1 bis 4, wobei das Polyethylenharz ein wenigstens teilweise neutralisiertes Copolymer von Ethylen, das ferner Monomereinheiten abgeleitet von wenigstens einer ungesättigten Carbonsäure umfasst, ist.

6. Durchschusshemmender gekrümmter Formkörper, wobei der Gegenstand eine Vielzahl von geformten Verbundstoffbahnen umfasst, die unidirektional ausgerichtete Fasern von Polyethylen mit ultrahohem Molekulargewicht (UHMWPE) und eine Matrix umfassend ein Polyethylenharz, das ein Homopolymer oder Copolymer von Ethylen mit einer Dichte von zwischen 870 und 980 kg/m³, wenn gemessen gemäß ISO 1183, und einem Schmelzflussindex von zwischen 0,5 und 50 g/10 min, wenn gemessen in einem trockenen Zustand und gemäß ASTM 1238B-13 bei einer Temperatur von 190 °C und einem Gewicht von 21,6 kg, ist, umfassen, wobei der durchschusshemmende gekrümmte Formkörper eine Flächendichte von weniger als 8,0 kg/m² und ein V₅₀-17-Korn-FSP von größer als 750 m/s gemäß MIL-STD-662f (1997) aufweist.

7. Durchschusshemmender gekrümmter Formkörper gemäß Anspruch 6, wobei der durchschusshemmende gekrümmte Formkörper eine mittlere Dicke von weniger als 8 mm aufweist.

8. Durchschusshemmender gekrümmter Formkörper gemäß einem der Ansprüche 6 oder 7, wobei der durchschusshemmende gekrümmte Formkörper eine Rückseitensignatur von weniger als 20 mm, wenn gemessen gemäß NIJ010601 9 mm FMJ RN Remington-Angriff, aufweist.

9. Durchschusshemmender gekrümmter Formkörper gemäß einem der Ansprüche 6 bis 8, ferner umfassend wenigstens eine Schicht, die Kohlenstofffaser umfasst.

10. Durchschusshemmender gekrümmter Formkörper gemäß einem der Ansprüche 6 bis 9, ferner umfassend an der Außenseite eine Beschichtung, die Polyharnstoff umfasst.

11. Durchschusshemmender gekrümmter Formkörper gemäß einem der Ansprüche 6 bis 10, wobei der durchschusshemmende gekrümmte Formkörper eine durchschusshemmende Helmschale oder ein Radom ist.

12. Durchschusshemmender gekrümmter Formkörper gemäß Anspruch 11, der eine durchschusshemmende Helmschale ist und eine Ohr-zu-Ohr-Steifigkeit von höchstens 5 mm, gemessen 24 h nach 25 Kompressionszyklen mit 200 lbs, aufweist.

13. Durchschusshemmender gekrümmter Formkörper gemäß Anspruch 11, der eine durchschusshemmende Helmschale ist, oder durchschusshemmender gekrümmter Formkörper gemäß Anspruch 12 mit Festigkeit gegen stumpfen Aufprall von weniger als 110 G, wenn gemessen gemäß DOT FMVSS 218.

14. Durchschusshemmender Helm, umfassend den durchschusshemmenden gekrümmten Formkörper, der eine durchschusshemmende Helmschale gemäß einem der Ansprüche 11 bis 13 ist.

## Revendications

1. Procédé de fabrication d'un article pare-balles moulé incurvé, ledit procédé comprenant
- la formation d'un empilement d'une pluralité de feuilles composites
- la pression de l'empilement comprenant les feuilles composites à une température comprise entre 80 °C et 150 °C et à une pression comprise entre 10 et 400 bars pendant au moins 5 minutes pour obtenir un article moulé incurvé,
- le refroidissement de l'empilement compacté à une température inférieure à 80 °C tout en maintenant la pression au-dessus de 10 bars,
- la libération de la pression de l'article moulé incurvé refroidi ;
dans lequel les feuilles composites comprennent des fibres de polyéthylène à haute ténacité alignées unidirectionnellement et une matrice comprenant une résine de polyéthylène qui est un homopolymère ou un copolymère d'éthylène, **caractérisé en ce que** ledit éthylène a une densité comprise entre 870 et 980 kg/m³ lorsqu'elle est mesurée selon la norme ISO 1183 et un indice d'écoulement à chaud compris entre 0,5 et 50 g/10 min lorsqu'il est mesuré à l'état sec et selon la norme ASTM 1238B-13 à une température de 190 °C et un poids de 21,6 kg.

2. Procédé selon la revendication 1 dans lequel la feuille composite comprend de 2 à 25 % en poids de la résine polyéthylène par rapport au poids total de la feuille composite.

3. Procédé selon l'une quelconque des revendications 1 et 2, dans lequel la résine de polyéthylène présente un module de traction à 25 °C compris entre 50 MPa et 500 MPa et un module de traction à 110 °C compris entre 0,1 et 10 MPa, déterminés selon la norme ASTM D5026 à une fréquence de 1 Hz à une vitesse de chauffage de 5 °C.

4. Procédé selon l'une quelconque des revendications 1 à 3, dans lequel la résine de polyéthylène comprend au moins 90 % molaires de motifs monomériques dérivés de l'éthylène.

5. Procédé selon l'une quelconque des revendications 1 à 4, dans lequel la résine de polyéthylène est un copolymère d'éthylène au moins partiellement neutralisé comprenant en outre des motifs monomériques dérivés d'au moins un acide carboxylique insaturé.

6. Article pare-balles moulé incurvé, lequel article comprend une pluralité de feuilles composites moulées comprenant des fibres de polyéthylène à poids moléculaire ultra-élevé (UHMWPE) alignées unidirectionnellement et une matrice comprenant une résine de polyéthylène qui est un homopolymère ou un copolymère d'éthylène ayant une densité comprise entre 870 et 980 kg/m³ lorsqu'elle est mesurée selon la norme ISO 1183 et un indice d'écoulement à chaud compris entre 0,5 et 50 g/10 min lorsqu'il est mesuré à l'état sec et selon la norme ASTM 1238B-13 à une température de 190 °C et un poids de 21,6 kg, lequel article pare-balles moulé incurvé a une densité surfacique inférieure à 8,0 kg/m² et une V₅₀ obtenue avec le PSF de 17 grains supérieure à 750 m/s selon la norme MIL-STD-662f (1997).

7. Article pare-balles moulé incurvé selon la revendication 6, dans lequel l'article pare-balles moulé incurvé a une épaisseur moyenne inférieure à 8 mm.

8. Article pare-balles moulé incurvé selon l'une quelconque des revendications 6 ou 7, dans lequel l'article pare-balles moulé incurvé a une déformation de face arrière inférieure à 20 mm lorsqu'elle est mesurée selon la norme de menace NIJ010601 FMJ RN Remmington de 9 mm.

9. Article pare-balles moulé incurvé selon l'une quelconque des revendications 6 à 8, qui comprend en outre au moins une couche comprenant une fibre de carbone.

10. Article pare-balles moulé incurvé selon l'une quelconque des revendications 6 à 9, qui comprend en outre sur la surface extérieure un revêtement comprenant de la polyurée.

11. Article pare-balles moulé incurvé selon l'une quelconque des revendications 6 à 10 dans lequel l'article pare-balles moulé incurvé est une coque de casque pare-balles ou un radôme.

12. Article pare-balles moulé incurvé selon la revendication 11 qui est une coque de casque pare-balles et ayant une rigidité d'oreille à oreille d'au plus 5 mm mesurée 24 h après 25 cycles de compression à 200 lb.

13. Article pare-balles moulé incurvé selon la revendication 11 qui est une coque de casque pare-balles ou l'article pare-balles moulé incurvé selon la revendication 12 ayant une performance d'impact contondant inférieure à 110 G lorsqu'elle est mesurée selon la norme DOT FMVSS 218.

14. Casque pare-balles comprenant l'article pare-balles moulé incurvé qui est une coque de casque pare-balles telle que définie dans l'une quelconque des revendications 11 à 13.
